# EUROPÄISCHE PATENTSCHRIFT

(11) **EP 2 923 140 B1**
(45) Veröffentlichungstag und Bekanntmachung des Hinweises auf die Patenterteilung: **04.01.2017**
(21) Anmeldenummer: 13798619.6
(22) Anmeldetag: 22.11.2013
(51) Int. Cl.: F16P 3/08, H01H 27/00

(54) **SCHUTZTÜRÜBERWACHUNGSSYSTEM**
PROTECTIVE DOOR MONITORING SYSTEM
SYSTÈME DE SURVEILLANCE DE PORTE DE PROTECTION

(30) Priorität: 23.11.2012 DE 102012111342
(43) Veröffentlichungstag der Anmeldung: 30.09.2015
(73) Patentinhaber: Pilz GmbH & Co. KG, 73760 Ostfildern (DE)
(72) Erfinder: RINK, Joachim, 73760 Ostfildern (DE); WINKLER, Markus, 73760 Ostfildern (DE)
(74) Vertreter: Witte, Weller & Partner Patentanwälte mbB
(86) Internationale Anmeldenummer: PCT/EP2013/074436
(87) Internationale Veröffentlichungsnummer: WO 2014/079959

(56) Entgegenhaltungen:
- DE-A1-102008 032 246
- JP-A- 2004 353 849
- JP-A- 2008 186 757
- US-B1- 6 268 574

## Beschreibung

Die vorliegende Erfindung betrifft ein Schutztürüberwachungssystem mit einer Schutztür als Zugang zu einem Sicherheitsbereich, mit einem Schutztürüberwachungsmodul zur Überwachung eines Zustands der Schutztür, wobei das Schutztürüberwachungsmodul einen Betätiger und einen Sensor aufweist, welche elektrisch kontaktlos in Wechselwirkung miteinander bringbar sind und dadurch ein Schutztürsignal erzeugen, mit einer Steuerungseinheit, welche dazu eingerichtet ist, das Schutztürsignal auszulesen und eine im Sicherheitsbereich befindliche Maschine oder Anlage in Abhängigkeit des Schutztürsignals zu steuern, und mit einer Verriegelungseinrichtung mit einem Grundkörper und einem daran angeordneten Verriegelungshebel, welcher gegenüber dem Grundkörper aus einer Freigabestellung in eine Sperrstellung bringbar ist, in welcher der Verriegelungshebel die elektrisch kontaktlose Wechselwirkung zwischen dem Betätiger und dem Sensor verhindert, wobei die Verriegelungseinrichtung eine Aufnahme für ein abschließbares Sicherungsteil aufweist, welches, in die Aufnahme eingeführt, den Verriegelungshebel in seiner Sperrstellung hält, wobei der Verriegelungshebel gegenüber dem Grundkörper aus der Freigabestellung in die Sperrstellung um eine Schwenkachse mechanisch verschwenkbar ist.

Die vorliegende Erfindung betrifft ferner eine Verriegelungseinrichtung für ein Schutztürüberwachungsmodul, welches einen Zustand einer Schutztür überwacht und einen Betätiger sowie einen Sensor besitzt, welche elektrisch kontaktlos in Wechselwirkung miteinander bringbar sind und dadurch ein Schutztürsignal erzeugen, wobei die Verriegelungseinrichtung einen Grundkörper und einen daran angeordneten Verriegelungshebel aufweist, welcher gegenüber dem Grundkörper aus einer Freigabestellung in eine Sperrstellung bringbar ist, in welcher der Verriegelungshebel die elektrisch kontaktlose Wechselwirkung zwischen dem Betätiger und dem Sensor verhindert, und wobei die Verriegelungseinrichtung eine Aufnahme für ein abschließbares Sicherungsteil aufweist, welches, in die Aufnahme eingeführt, den Verriegelungshebel in seiner Sperrstellung hält, wobei der Verriegelungshebel gegenüber dem Grundkörper aus der Freigabestellung in die Sperrstellung um eine Schwenkachse mechanisch verschwenkbar ist.

Solche Schutztürüberwachungssysteme sind aus dem Stand der Technik bereits bekannt. Unter dem Namen "PSENslock" vertreibt die Anmelderin ein gattungsgemäßes Schutztürüberwachungsmodul, welches vielseitig einsetzbar ist und für Anwendungen bis zur höchsten Sicherheitsstufe PL e (Performance Level e nach ISO 13849-1) geeignet ist. Eine ausführliche Produktdokumentation zu diesem Produkt ist auf der Homepage der Anmelderin verfügbar (http://www.pilz.de; Application Note - Nr. 1002459_DE_01 vom 06.02.2012).

Gattungsgemäße Schutztürüberwachungssysteme werden an Schutztüren eingesetzt, die den Zugang zu einer automatisiert arbeitenden Maschine oder Anlage verhindern sollen, solange sich die Maschine oder Anlage in einem Gefahr bringenden Zustand befindet. Der Zugang zu diesen Maschinen oder Anlagen kann ebenso gut auch über Schutzklappen, Hauben, Schwenk- oder Schiebetüren erfolgen. Diese Zugänge sollen ebenfalls als Schutztüren im vorliegenden Sinne verstanden werden.

Um zu verhindern, dass ein Bediener während einer gefährlichen Maschinenbewegung in den Arbeits- bzw. Sicherheitsbereich gelangt, wird der Sicherheitsbereich häufig durch eine Schutzumhausung von der Außenwelt abgetrennt. Der Zugang zu dem Sicherheitsbereich ist dann meist nur durch eine oder mehrere Schutztüren in der Schutzumhausung möglich.

Maschinen oder Anlagen, bei denen derartige Schutzumhausungen eingesetzt werden, sind beispielsweise Roboter, Werkzeugmaschinen mit schnell drehender Spindel, Transport- oder Förderanlagen, Pressen oder andere Maschinen und Anlagen, von deren Betrieb eine Gefahr für Personen ausgeht, die sich im Arbeitsbereich der Maschine befinden. An Schutztüren vorgesehene Schutztürüberwachungsmodule können als Meldegeräte dienen, mit deren Hilfe eine Steuereinrichtung den geschlossenen Zustand der Schutztür erkennen kann. Die Steuereinrichtung ist dazu ausgebildet, eine Inbetriebnahme der Maschine oder Anlage nur zu ermöglichen, wenn die Schutztür geschlossen ist. Wird die Schutztür im laufenden Betrieb geöffnet (sofern möglich), muss die Steuereinrichtung die Maschine oder Anlage in einen gefahrlosen Zustand bringen, in dem beispielsweise die Stromversorgung zu der Maschine oder Anlage abgeschaltet wird.

Es gibt eine Vielzahl von Maschinen und Anlagen, von denen auch nach dem Abschalten noch für eine gewisse Zeit eine Gefahr ausgeht, beispielsweise weil die Maschine oder Anlage noch ausläuft. Diese Zeit wird auch als Auslaufzeit der Anlage bezeichnet. In diesen Fällen werden spezielle Schutztürüberwachungsmodule bzw. Sicherheitsschalter benötigt. Solche Sicherheitsschalter verhindern ein Öffnen der Schutztür so lange, bis die Maschine oder Anlage ihren gefahrlosen Zustand erreicht hat. Diese Funktion wird als Zuhaltung der Schutztür bezeichnet.

Klassischerweise besitzen die bekannten Sicherheitsschalter einen so genannten Betätiger, der an der beweglichen Schutztür angeordnet ist. Bei geschlossener Schutztür greift der Betätiger in eine Betätigeraufnahme am Türrahmen, was mithilfe eines oder mehrerer Sensoren detektiert wird. Bei einem Sicherheitsschalter mit Zuhaltung wird der Betätiger außerdem in der Betätigeraufnahme gegen ein Zurückziehen blockiert. Der Betätiger erfüllt in diesem Fall also zwei Funktionen, nämlich einerseits als Detektorelement, mit dessen Hilfe die Schließposition der Schutztür detektiert werden kann, und andererseits als Riegel, der ein Öffnen der Schutztür so lange verhindert, wie der Betätiger in der Betätigeraufnahme blockiert ist. Die Zuhaltung kann beispielsweise über einen elektromotorischen oder elektromagnetischen Aktor erfolgen, der von der Steuereinrichtung betätigt wird, so lange, bis die überwachte Maschine oder Anlage ihren sicheren Zustand erreicht hat.

Ein Beispiel für einen solchen Sicherheitsschalter mit Zuhaltesystem ist auch in der EP 1 430 497 A1 offenbart.

Die oben beschriebenen Zuhaltungen an den Schutztüren müssen jedoch nicht immer nur sicherheitsrelevante Funktionen erfüllen, wie die Verhinderung eines Zugangs zum Sicherheitsbereich während der Auslaufzeit der Anlage. Zuhaltungen dienen des Öfteren auch als Prozessschutz. In diesem Fall verhindert die Zuhaltung eine versehentliche Anlagenunterbrechung durch den Bediener. Wenngleich eine Zuhaltung in manchen Anwendungsfällen aus sicherheitstechnischen Gesichtspunkten nicht notwendig ist, verhindert sie dann zumindest ein unabsichtliches Unterbrechen des Produktionsprozesses. Da je nach Komplexität der Anlage eine Wieder-Inbetriebnahme der Anlage kompliziert und zeitaufwändig sein kann, lassen sich durch einen solchen Prozessschutz wichtige Produktionszeit und damit auch Produktionskosten sparen. Es versteht sich, dass die oben beschriebenen Schutztürüberwachungsmodule, welche auch als Sicherheitsschalter bezeichnet werden, auch kombiniert als Prozessschutz mit sicherheitsrelevanter Funktion eingesetzt werden können.

Unabhängig von der Tatsache, ob an den Schutztüren Sicherheitsschalter mit oder ohne Zuhaltung eingesetzt werden, ergeben sich in der Praxis häufig Probleme durch fehlerhafte Bedienung und gewollte oder ungewollte Manipulationen der Sicherheitseinrichtungen. Ein Manipulationsschutz dieser Sicherheits- und Überwachungsanlagen ist daher von immenser Wichtigkeit. Teilweise kann es aber auch unabsichtlich aufgrund fehlerhaften Handelns des Bedienpersonals zu Sicherheitslücken kommen, welche unbedingt verhindert werden müssen. Bei oben genannten Schutztürüberwachungssystemen könnte beispielsweise der Fall auftreten, dass sich ein Bediener Zugang zu der Anlage verschafft, wobei die Anlage beim Öffnen der Schutztür ordnungsgemäß abgeschaltet wird. Falls nun jedoch ein zweiter Bediener den ersten Bediener im Sicherheitsbereich nicht bemerkt, die Schutztür wiederum schließt und die Anlage in Gang setzt, so könnte dies zu einem erheblichen Sicherheitsrisiko des ersten Bedieners innerhalb der Anlage führen. Eine solche Situation ist insbesondere bei sehr großen, schlecht einzusehenden Anlagen denkbar.

Die DE 10 2008 032 246 A1 beschreibt eine Vorrichtung zum lösbaren Verriegeln eines geschlossenen Zustands einer Raumtrenneinrichtung, wobei die Vorrichtung ein erstes Teil mit einer Öffnung und ein zweites Teil aufweist, wobei das erste Teil und das zweite Teil relative zueinander bewegbar sind und dadurch die Öffnung mindestens teilweise schließbar ist, und wobei die Vorrichtung einen Riegel aufweist mit einem von außerhalb der Raumtrenneinrichtung bedienbaren Bedienelement, mittels dem der Riegel aus einer ersten Position in eine zweite, den geschlossenen Zustand der Raumtrenneinrichtung verriegelnde Position überführbar ist, wobei der Riegel eine mit einem separat von der Vorrichtung ausgebildeten Blockierelement in eine den Riegel blockierende Wirkverbindung bringbare Anlagefläche aufweist, die derart an dem Riegel angeordnet ist, dass der Riegel mittels des Blockierelements in der ersten Position blockierbar ist, und wobei der Riegel aus der blockierten ersten Position nicht in die zweite Position überführbar ist.

Eine weitere Vorrichtung dieser Art ist aus der JP 2008 186757 A bekannt.

Ferner zeigt die JP 2004 353849 A ein Schutztürüberwachungssystem gemäß dem Oberbegriff des Anspruchs 1 sowie eine Verriegelungseinrichtung gemäß dem Oberbegriff des Anspruchs 11.

Vor diesem Hintergrund ist es eine Aufgabe der vorliegenden Erfindung, ein verbessertes Schutztürüberwachungssystem mit erweiterten Sicherheitsfunktionen und einem erhöhten Manipulationsschutz bereitzustellen,

Diese Aufgabe wird gemäß einem Aspekt der vorliegenden Erfindung durch ein Schutztürüberwachungssystem der eingangs genannten Art dadurch gelöst, dass der Verriegelungshebel über ein entlang der Schwenkachse angeordnetes Federelement mit dem Grundkörper gekoppelt ist, welches in der Freigabestellung und in der Sperrstellung eine Federkraft ausübt, die den Verriegelungshebel gegen den Grundkörper drückt, und wobei an dem Grundkörper eine erste und eine zweite Ausnehmung vorgesehen sind, wobei der Verriegelungshebel in der Freigabestellung durch Anordnung in der ersten Ausnehmung verrastet und in der Sperrstellung durch Anordnung in der zweiten Ausnehmung verrastet.

Gemäß einem weiteren Aspekt der vorliegenden Erfindung wird die oben genannte Aufgabe durch eine Verriegelungseinrichtung der eingangs genannten Art dadurch gelöst, dass der Verriegelungshebel über ein entlang der Schwenkachse angeordnetes Federelement mit dem Grundkörper gekoppelt ist, welches in der Freigabestellung und in der Sperrstellung eine Federkraft ausübt, die den Verriegelungshebel gegen den Grundkörper drückt, und wobei an dem Grundkörper eine erste und eine zweite Ausnehmung vorgesehen sind, wobei der Verriegelungshebel in der Freigabestellung durch Anordnung in der ersten Ausnehmung verrastet und in der Sperrstellung durch Anordnung in der zweiten Ausnehmung verrastet.

Die zusätzliche Verriegelungseinrichtung ermöglicht einem Bediener somit, beim Betreten des Sicherheitsbereichs den genannten Verriegelungshebel von seiner Freigabestellung in die Sperrstellung zu bringen. In der Sperrstellung verhindert der Verriegelungshebel die elektrisch kontaktlose Wechselwirkung zwischen dem Betätiger und dem Sensor. Die eingangs beispielhaft erwähnte Sicherheitslücke, dass eine Wieder-Inbetriebnahme der Maschine oder Anlage zu einem Zeitpunkt erfolgt, während dem sich ein Bediener innerhalb des Sicherheitsbereichs befindet, ist dadurch geschlossen.

Ein Bediener, der sich durch die Schutztür Zugang zu dem Sicherheitsbereich verschafft, öffnet automatisch die elektrisch kontaktlose Verbindung zwischen Betätiger und Sensor des Schutztürüberwachungsmoduls, wodurch die Steuerungseinheit das Schutztürsignal "Tür geöffnet" erhält und daraufhin die Maschine oder Anlage abschaltet. Der Bediener kann dann den Verriegelungshebel in die Sperrstellung bringen und diese Sperrstellung durch Einsetzen eines abschließbaren Sicherungsteils, beispielsweise eines Vorhängeschlosses, zusätzlich absichern. Da der Verriegelungshebel in der Sperrstellung die kontaktlose Wechselwirkung zwischen dem Betätiger und dem Sensor verhindert, ist es während dieser Zeit, unabhängig von der Stellung der Schutztür, nicht möglich, dass die Steuerungseinheit das Schutztürsignal "Schutztür geschlossen" erhält und die Maschine wieder in Gang setzen kann. Sollte ein zweiter Bediener dann versuchen, die Maschine bzw. Anlage wieder in Gang zu setzen, ist ihm dies nicht möglich, ohne den Verriegelungshebel wieder in seine Freigabestellung zu bringen. Allerdings benötigt er hierfür den Schlüssel für das abschließbare Sicherungsteil (zum Beispiel für das Vorhängeschloss). Die Schlüssel sollten daher persönlich vergeben werden, so dass es in dem genannten Beispiel nur dem ersten Bediener möglich ist, die Maschine bzw. Anlage wieder in Gang zu setzen, sobald er den Sicherheitsbereich verlassen hat.

Der Verriegelungshebel kann relativ einfach ausgestaltet sein. Wie bereits erwähnt, muss er dazu geeignet sein, die elektrisch kontaktlose Wechselwirkung zwischen dem Betätiger und dem Sensor zu verhindern. In der Praxis geschieht diese elektrisch kontaktlose Wechselwirkung durch einen im Betätiger vorgesehenen Transponder und einen im Sensor entsprechend vorgesehenen Detektor. Als Transponder wird vorzugsweise ein RFID-Transponder verwendet. Durch die individuelle Kennung solcher RFID-Transponder wird ein zusätzlicher Schutz vor Manipulationen bereitgestellt. Sende- und Empfangsstärke des Transponders bzw. Detektors können so eingestellt sein, dass bei einer Sperrstellung des Verriegelungshebels kein Signal durch den Detektor bzw. Sensor empfangen wird. Ein unbeabsichtigtes Schutztürsignal "Schutztür geschlossen" ist somit während der Sperrstellung des Verriegelungshebels praktisch unmöglich.

Wie bereits erwähnt, ist der Verriegelungshebel erfindungsgemäß über ein entlang der Schwenkachse angeordnetes Federelement mit dem Grundkörper gekoppelt, welches in der Freigabestellung und in der Sperrstellung eine Federkraft ausübt, die den Verriegelungshebel gegen den Grundkörper drückt. Als Federelement kann beispielsweise eine mechanische Druckfeder verwendet werden. Grundsätzlich wäre jedoch auch ein pneumatisches oder hydraulisches Federelement denkbar. Die von dem Federelement auf den Verriegelungshebel ausgeübte Federkraft hat im Wesentlichen den Zweck, ein unabsichtliches Lösen des Verriegelungshebels aus seiner Freigabestellung und/oder aus seiner Sperrstellung zu verhindern. Sie drückt den Verriegelungshebel gegen den Grundkörper der Verriegelungseinrichtung. Um den Verriegelungshebel aus der Sperrstellung in die Freigabestellung oder umgekehrt verschwenken zu können, muss der Bediener den Verriegelungshebel also zunächst entgegen der Wirkung der Federkraft leicht anheben. Die von dem Federelement ausgeübte Federkraft sollte daher nicht allzu groß sein.

Wie ebenfalls bereits erwähnt, sind erfindungsgemäß an dem Grundkörper eine erste und eine zweite Ausnehmung vorgesehen, wobei der Verriegelungshebel in der Freigabestellung durch Anordnung in der ersten Ausnehmung verrastet und in der Sperrstellung durch Anordnung in der zweiten Ausnehmung verrastet. Eine solche Verrastbarkeit des Verriegelungshebels bietet zusätzlich zu dem oben genannten Federelement Schutz gegen ein unbeabsichtigtes Verschwenken des Verriegelungshebels aus der Sperrstellung oder der Freigabestellung heraus. Die Positionen des Verriegelungshebels in der Freigabestellung und der Sperrstellung sind dadurch auch exakt definiert. Dies vereinfacht die Handhabung für den Bediener. Die beiden am Grundkörper vorgesehenen Ausnehmungen ermöglichen eine mechanisch einfache und dennoch stabile Verrastbarkeit des Verriegelungshebels. Insbesondere in Kombination mit dem oben bereits erwähnten Federelement wird der Verriegelungshebel somit nämlich bei Erreichen der Sperrstellung bzw. der Freigabestellung quasi automatisch aufgrund der Federkraft in die jeweilige Ausnehmung hineingezogen. Ein Lösen dieser Verrastung lässt sich dann wiederum durch Anheben des Verriegelungshebels entgegen der Federkraft erreichen. Die beiden im Grundkörper vorgesehenen Ausnehmungen sind vorzugsweise orthogonal zueinander angeordnet.

In einer Ausgestaltung weist das Schutztürüberwachungsmodul ferner einen Elektromagneten für eine magnetische Zuhaltung der Schutztür auf.

Diese Zuhaltung kann eine sicherheitsrelevante Funktion erfüllen und/oder als Prozessschutz dienen. Der Elektromagnet erzeugt je nach Anwendungsfall vorzugsweise eine Zuhaltekraft auf die Schutztür im Bereich von 500 bis 1000 N. Die elektromagnetische Zuhaltekraft verhindert ein unbeabsichtigtes Öffnen der Schutztür und bietet höchste Sicherheit durch den manipulationssicheren Betätiger. Sofern der Elektromagnet eine sicherheitsrelevante Funktion erfüllt, kann dieser beispielsweise durch die Steuerungseinheit derart angesteuert sein, dass der Elektromagnet die Schutztür erst freigibt, wenn die im Sicherheitsbereich befindliche Maschine oder Anlage abgeschaltet wurde und nach der Auslaufzeit zum vollständigen Stillstand gekommen ist. Umgekehrt wird die vom Elektromagneten erzeugte Zuhaltekraft erst dann erzeugt, wenn der Sensor den Betätiger bzw. den RFID-Transponder detektiert und das Schutztürsignal "Tür geschlossen" an die Steuerungseinheit weitergibt. Da dies gemäß der vorliegenden Erfindung durch die Verriegelungseinrichtung in der Sperrstellung verhindert wird, kann dies erst geschehen, wenn das abschließbare Sicherungsteil gelöst wurde und der Verriegelungshebel in die Freigabestellung gebracht wurde.

In einer weiteren Ausgestaltung verhindert der Verriegelungshebel in der Sperrstellung die elektrisch kontaktlose Wechselwirkung zwischen dem Betätiger und dem Sensor durch mechanische Beabstandung der beiden voneinander.

Der Verriegelungshebel ist also in seiner Sperrstellung derart angeordnet, dass er beim Versuch die Tür zu schließen zwischen den Betätiger (RFID-Transponder) und den Sensor gerät. Vorzugsweise lässt sich in diesem Zustand die Schutztür dann auch nicht mehr schließen. Der Verriegelungshebel hält in der Sperrstellung den Betätiger also ausreichend weit weg von dem Sensor, so dass der Sensor das Signal des Betätigers nicht oder nicht in ausreichender Stärke empfangen kann.

In einer weiteren Ausgestaltung ist der Sensor an einem ersten Teil der Schutztür und der Betätiger an einem zweiten Teil der Schutztür angeordnet, wobei die beiden Teile bei einem Öffnen der Schutztür voneinander getrennt werden.

Mit Schutztürüberwachungsmodulen versehene Schutztüren werden häufig auch als trennende Schutzeinrichtungen bezeichnet. Sowohl bei einer Schwenkals auch bei einer Schiebetür handelt es sich bei den erwähnten beiden Teilen der Schutztür in der Praxis zumeist um die Tür selbst sowie um den Türrahmen. Letzterer wird im Fachjargon häufig auch als Türzarge bezeichnet. Es sei darauf hingewiesen, dass die Position von Betätiger und Sensor grundsätzlich austauschbar ist. Der Betätiger des Schutztürüberwachungsmoduls kann zum Beispiel an der Tür angeordnet sein und der Sensor des Schutztürüberwachungsmoduls dementsprechend an der Türzarge angeordnet sein. Alternativ dazu kann der Sensor aber auch an der Tür selbst angeordnet sein, so dass in diesem Fall der Betätiger an der Türzarge angeordnet ist.

In einer weiteren Ausgestaltung ist die Verriegelungseinrichtung an dem ersten Teil der Schutztür angeordnet.

Die Verriegelungseinrichtung ist in diesem Fall vorzugsweise lösbar an dem Gehäuse des Sensors angebracht. Dies kann beispielsweise mithilfe von Schrauben geschehen. Selbstverständlich sind jedoch auch andere Befestigungsmöglichkeiten denkbar. Die Verriegelungseinrichtung kann in diesem Fall gemeinsam mit dem Sensor entweder an der Tür oder alternativ dazu, wie oben bereits beschrieben, an der Türzarge befestigt sein.

In einer alternativen Ausgestaltung ist die Verriegelungseinrichtung an dem zweiten Teil der Schutztür angeordnet.

Da die Verriegelungseinrichtung bzw. der Verriegelungshebel die elektrisch kontaktlose Wechselwirkung zwischen dem Betätiger und dem Sensor vorzugsweise dadurch verhindert, dass er die beiden voneinander beabstandet und einen direkten Kontakt zwischen dem Sensor und dem Betätiger verhindert, lässt sich die Verriegelungseinrichtung grundsätzlich auch an dem Gehäuse des Betätigers anordnen. Auch in dieser Ausgestaltung sind lösbare als auch feste Verbindungen zwischen der Verriegelungseinrichtung und dem Gehäuse des Betätigers denkbar. Die Verriegelungseinrichtung kann gemeinsam mit dem Betätiger sowohl an der Tür als auch alternativ dazu an der Türzarge befestigt sein. Dies ist je nach Anwendungsfall und Platzbedarf variierbar.

Vorzugsweise wird der Verriegelungshebel um 90° verschwenkt, um diesen aus der Freigabestellung in seine Sperrstellung zu bringen bzw. umgekehrt. Die Längsrichtung des Verriegelungshebels schließt mit selbiger in der Sperrstellung im Vergleich zur Freigabestellung also einen Winkel von vorzugsweise 90° ein.

Um den Verriegelungshebel möglichst einfach von Hand verschwenken zu können, ist gemäß einer weiteren Ausgestaltung an dem Verriegelungshebel ein im Wesentlichen entlang der Schwenkachse verlaufender Haltegriff vorgesehen.

Mithilfe dieses Haltegriffs lässt sich der Verriegelungshebel relativ einfach verdrehen bzw. verschwenken. Für eine einfache und angenehme Handhabung kann dieser Haltegriff auch ergonomisch geformt sein. Durch die Anbringung des Haltegriffs entlang der Schwenkachse des Verriegelungshebels lässt sich die zum Verschwenken bzw. Verdrehen erforderliche Kraft sehr leicht auf den Verriegeiungshebel übertragen. Der Verriegelungshebel selbst ist dabei vorzugsweise plattenförmig ausgestaltet, so dass sich dieser in der Sperrstellung zwischen dem Betätiger und dem Sensor anordnen lässt.

In einer weiteren Ausgestaltung ist die Aufnahme für das abschließbare Sicherungsteil als Bohrung in dem Verriegelungshebel ausgestaltet.

Ein als abschließbare Sicherungsteil verwendetes Vorhängeschloss lässt sich somit direkt in die im Verriegelungshebel vorgesehene Bohrung einsetzen. Vorzugsweise ist die Bohrung nur zugänglich, wenn sich der Verriegelungshebel in der Sperrstellung befindet. Ein Vorhängeschloss lässt sich also nur dann an der Verriegelungseinrichtung befestigen, wenn der Verriegelungshebel in der Sperrstellung ist. Die Position der Bohrung sollte im Übrigen auch so gewählt sein, dass sich der Verriegelungshebel bei einem in die Bohrung eingesetzten Vorhängeschloss nicht mehr aus der Sperrstellung in die Freigabestellung bewegen bzw. verschwenken lässt. Dies wird dadurch verhindert, dass das Vorhängeschloss bei einem Versuch, den Hebel zu verschwenken, mit dem Grundkörper der Verriegelungseinrichtung kollimiert. Die genannte Bohrung ist dazu vorzugsweise im Bereich eines Endes des plattenförmigen Verriegelungshebels angeordnet.

In einer weiteren Ausgestaltung ist an dem Grundkörper eine Aussparung vorgesehen, welche in der Sperrstellung des Verriegelungshebels mit der in dem Verriegelungshebel vorgesehenen Bohrung zumindest teilweise fluchtet.

Diese Aussparung kann entweder als eine Bohrung oder als eine Art Einkerbung im Grundkörper vorgesehen sein. Dadurch, dass diese Aussparung in der Sperrstellung des Verriegelungshebels mit der in dem Verriegelungshebel vorgesehenen Bohrung fluchtet, entsteht bei einem Einsetzen eines Vorhängeschlosses in die Bohrung eine Art Formschluss zwischen dem Bügel des Vorhängeschlosses und der Bohrung als auch der Aussparung am Grundkörper. Das Vorhängeschloss wird in der Sperrstellung des Verriegelungshebels also nicht nur in die Bohrung des Verriegelungshebels, sondern auch in die Aussparung des Grundkörpers eingesetzt. Liegen Bohrung und Aussparung in der Sperrstellung exakt übereinander, so ist ein Verschwenken des Verriegelungshebels bei eingesetztem Vorhängeschloss nicht mehr möglich, ohne das Vorhängeschloss oder die Verriegelungseinrichtung zu zerstören. Die zusätzliche Sicherung durch die Verriegelungseinrichtung lässt sich somit nicht ungewollt manipulieren. Ein Schließen der Tür bzw. eine elektrisch kontaktlose Wechselwirkung zwischen Betätiger und Sensor ist währenddessen ausgeschlossen.

Um die eingangs erwähnte Sicherheitslücke noch effektiver schließen zu können, sind an dem Verriegelungshebel vorzugsweise zwei Bohrungen vorgesehen. Genauer gesagt sind an dem Verriegelungshebel gemäß einer weiteren Ausgestaltung zwei Bohrungen als Aufnahme für jeweils ein abschließbares Sicherungsteil und an dem Grundkörper zwei Aussparungen vorgesehen, welche in der Sperrstellung des Verriegelungshebels mit den im Verriegelungshebel vorgesehenen Bohrungen zumindest teilweise fluchten.

Gemäß dieser Ausgestaltung weist der Verriegelungshebel sozusagen zwei Steckplätze für jeweils ein Vorhängeschloss auf. Eine solche Ausgestaltung ist insbesondere bei mehreren Bedienern der Maschine oder Anlage von Vorteil, Ein erster Bediener sichert beim Betreten des Sicherheitsbereichs das Schutztürüberwachungsmodul durch ein erstes Vorhängeschloss ab. Falls dann eine zweite Person den Sicherheitsbereich betritt, kann auch diese den Verriegelungshebel in der Sperrstellung absichern, indem ein zweites Vorhängeschloss in die zweite Bohrung des Verriegelungshebels eingeführt bzw. eingehängt wird. Sollte der erste Bediener dann den Sicherheitsbereich wieder verlassen und dabei die Schutztür versuchen zu schließen, so erkennt dieser aufgrund des zweiten Vorhängeschlosses sofort, dass sich noch eine weitere Person im Sicherheitsbereich befindet. Die beiden Bediener können daher nur gemeinsam den Verriegelungshebel wieder in seine Freigabestellung bringen, indem beide Vorhängeschlösser vom Verriegelungshebel gelöst werden. Somit wäre es auch bei zwei Bedienern gesichert, dass sich keiner der beiden im Sicherheitsbereich befindet, wenn die Schutztür geschlossen wird und die Maschine bzw. Anlage wieder in Betrieb genommen wird. Es versteht sich, dass je nach Anzahl der potentiellen Bediener natürlich auch mehr als zwei Bohrungen bzw. Aufnahmen für Vorhängeschlösser an der Verriegelungseinrichtung vorgesehen sein können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Ebenso sei angemerkt, dass sich die oben genannten Ausgestaltungen und die in den abhängigen Ansprüchen definierten Merkmale nicht nur auf das Schutztürüberwachungssystem beziehen sondern auch auf die Verriegelungseinrichtung selbst.

Ausführungsbeispiele der Erfindung sind in der Zeichnung dargestellt und werden in der nachfolgenden Beschreibung näher erläutert. Es zeigen:
- Fig. 1: eine schematische Darstellung eines Schutztürüberwachungssystems,
- Fig. 2: eine schematische Darstellung eines Ausführungsbeispiels eines erfindungsgemäßen Schutztürüberwachungsmoduls,
- Fig. 3: eine perspektivische Ansicht des Schutztürüberwachungsmoduls mit einer erfindungsgemäßen Verriegelungseinrichtung gemäß einer ersten Ausführungsform,
- Fig. 4: die in Fig. 3 gezeigte Verriegelungseinrichtung in einer perspektivischen Ansicht (Fig. 4A) sowie in einer Explosionsdarstellung (Fig. 4B),
- Fig. 5: verschiedene Seitenansichten der Verriegelungseinrichtung aus Fig. 4 zur Veranschaulichung der Freigabestellung (Fig. 5A, B) sowie der Sperrstellung (Fig. 5C, D) der Verriegelungseinrichtung, und
- Fig. 6: das Schutztürüberwachungsmodul mit Verriegelungseinrichtung gemäß einer zweiten Ausführungsform.

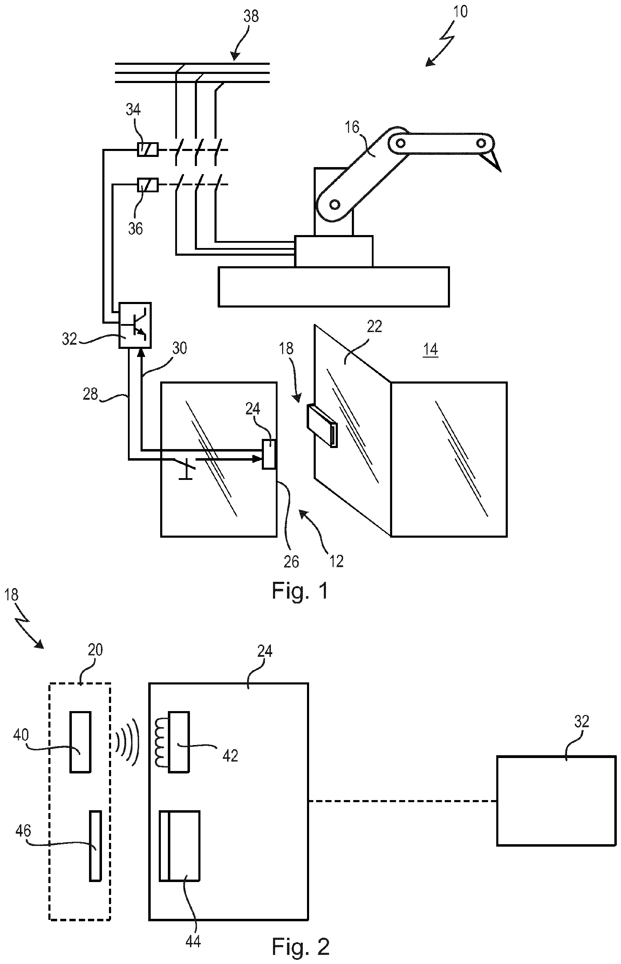

In Fig. 1 ist ein Schutztürüberwachungssystem in seiner Gesamtheit mit der Bezugsziffer 10 bezeichnet. Das Schutztürüberwachungssystem 10 beinhaltet eine Schutztür 12, welche den Zugang zu einem Sicherheitsbereich 14 absichert. In dem Sicherheitsbereich 14 kann beispielsweise ein Roboter 16 angeordnet sein. Da ein solcher Roboter 16 während seines Betriebs eine hohe Verletzungsgefahr für einen Bediener oder sonstige im Sicherheitsbereich 14 befindliche Personen ausstrahlt, sollte ein Zugang zu dem Sicherheitsbereich 14 während des Betriebs des Roboters 16 zwingend verhindert werden. Dies wird vorliegend über ein Schutztürüberwachungsmodul 18 gewährleistet, welches an der Schutztür 12 oder im Bereich der Schutztür 12 angeordnet ist.

Das Schutztürüberwachungsmodul 18 beinhaltet beispielsweise ein Türteil 20, das an einem beweglichen Teil 22 der Schutztür 12 befestigt ist, und ein Rahmenteil 24, das an einem Türgegenstück 26 angeordnet ist. In dem dargestellten Ausführungsbeispiel ist das Türgegenstück 26 ein feststehender Anschlag für den beweglichen Teil 22 der Schutztür 12. In anderen Ausführungsbeispielen kann das Türgegenstück 26 jedoch auch ein zweiter Türflügel einer zweiteiligen Schutztür sein. Im Übrigen sei darauf hingewiesen, dass die Schutztür 12 anstelle einer schwenkbaren Schutztür auch als Schiebetür ausgestaltet sein kann. Ebenso werden Hauben, Klappen oder sonstige trennende Schutzeinrichtungen, über die ein Zugang zu einem Sicherheitsbereich 14 möglich ist, als Schutztüren im vorliegenden Sinne verstanden.

Das Rahmenteil 24 des Schutztürüberwachungsmoduls 18 ist in dem gezeigten Ausführungsbeispiel über zwei Leitungen 28, 30 mit einer Steuerungseinheit 32 verbunden. Diese Verbindung kann auch kabellos ausgestaltet sein. Im Übrigen können auch mehr als zwei Leitungen 28, 30 oder auch nur eine Leitung zwischen diesen beiden Teilen vorgesehen sein. Die Steuerungseinheit 32 kann beispielsweise ein Sicherheitsschaltgerät aus der Reihe PNOZ® sein, das von der Anmelderin der vorliegenden Erfindung vertrieben wird. Dabei handelt es sich um mehrkanalig-redundante Sicherheitsschaltgeräte, die dazu ausgebildet sind, die Ausgangssignale von Meldegeräten, wie dem Schutztürüberwachungsmodul 18, auszuwerten und in Abhängigkeit davon einen elektrischen Verbraucher abzuschalten. Der elektrische Verbraucher ist in diesem Fall der Roboter 16. Dementsprechend steuert die Steuerungseinheit 32 zwei Schütze 34, 36 an, deren Arbeitskontakte in der Verbindung zwischen einer Stromversorgung 38 und dem Roboter 16 angeordnet sind.

Alternativ zu dem Sicherheitsschaltgerät könnte die Steuerungseinheit 32 auch als programmierbare Sicherheitssteuerung ausgebildet sein. Das Schutztürüberwachungsmodul 18 wäre in diesem Fall beispielsweise an eine programmierbare Sicherheitssteuerung angeschlossen, wie sie von der Anmelderin der vorliegenden Erfindung unter der Bezeichnung PSS® vertrieben wird.

Durch das Zusammenspiel der Schutztür 12, des Schutztürüberwachungsmoduls 18 und der Steuerungseinheit 32 wird die Stromversorgung zu der im Sicherheitsbereich 14 befindlichen Maschine oder Anlage 16 automatisch unterbrochen, sobald die Schutztür 12 geöffnet wird. Eine Wieder-Inbetriebnahme der Maschine oder Anlage 16 ist erst nach erneutem Schließen der Schutztür 12 möglich. Das Schutztürüberwachungsmodul 18 überwacht also den Zustand der Schutztür 12 und gibt ein entsprechendes Schutztürsignal ("Tür geöffnet" oder "Tür geschlossen") an die Steuerungseinheit 32 weiter. Das Schutztürüberwachungsmodul 18 kann beispielsweise durch das Schutztürsystem PSENslock realisiert sein, das von der Anmelderin der vorliegenden Erfindung vertrieben wird. Die grundsätzliche Funktionsweise des Schutztürüberwachungsmoduls 18 wird nachfolgend anhand der in Fig. 2 gezeigten schematischen Darstellung näher erläutert.

Das Schutztürüberwachungsmodul 18 weist einen Betätiger 40 und einen Sensor 42 auf. Betätiger 40 und Sensor 42 können elektrisch kontaktlos in Wechselwirkung miteinander gebracht werden. Der Betätiger 40 ist üblicherweise ein Sender oder Transponder, dessen Signale von dem Sensor 42 detektiert werden können. Sofern der Betätiger bzw. Transponder 40 nahe genug an den Sensor 42 gebracht wird, wird dadurch ein Schutztürsignal "Tür geschlossen" erzeugt, welches an die Steuerungseinheit 32 weitergegeben wird.

In der in Fig. 2 gezeigten schematischen Darstellung ist der Betätiger 40 in dem Türteil 20 und der Sensor 42 in dem Rahmenteil 24 des Schutztürüberwachungsmoduls 18 angeordnet. Es sei jedoch darauf hingewiesen, dass die Position von Betätiger 40 und Sensor 42 natürlich austauschbar ist. So könnte der Sensor 42 ebenso gut in dem in Fig. 1 schematisch dargestellten Türteil 20 angeordnet sein, wobei der Betätiger 40 dann dementsprechend in dem in Fig. 1 schematisch dargestellten Rahmenteil 24 der des Schutztürüberwachungsmoduls 18 angeordnet wäre. Wichtig ist dabei lediglich, dass Betätiger 40 und Sensor 42 an unterschiedlichen Teilen 22, 26 der Schutztür 12 angeordnet sind, welche bei einem Öffnen der Schutztür 12 voneinander getrennt werden. Vorzugsweise steht dabei stets der Sensor 42 mit der Steuerungseinheit 32 in Verbindung.

Um einen möglichst hohen Manipulationsschutz zu gewährleisten, ist die beschriebene Wechselwirkung zwischen Betätiger 40 und Sensor 42 vorzugsweise eine codierte Wechselwirkung. Der Betätiger 40 kann zum Beispiel als codierter RFID-Transponder ausgestaltet sein, welcher eindeutig von dem Sensor 42 identifiziert werden kann. Ein Manipulationsversuch, das Schutztürsignal "Schutztür geschlossen" über einen anderen Transponder oder anderen Gegenstand zu erzeugen, wird daher scheitern. Ein solches System wird von der Anmelderin der vorliegenden Erfindung unter dem Namen PSENcode vertrieben.

Der schematischen Darstellung in Fig. 2 ist des Weiteren zu entnehmen, dass das Schutztürüberwachungsmodul 18 optional mit einer Zuhaltefunktion (auch Zuhaltung genannt) ausgestattet sein kann. Diese Zuhaltung beinhaltet vorzugsweise einen Elektromagneten 44 sowie ein magnetisierbares Gegenstück 46. Deren Position ist ebenso zwischen Türteil 20 und Rahmenteil 24 austauschbar. Der Elektromagnet 44 übt auf das magnetisierbare Gegenstück eine Zuhaltekraft aus, welche ein unbeabsichtigtes Öffnen der Schutztür 12 verhindern soll. Diese Zuhaltekraft liegt vorzugsweise im Bereich von 500 bis 1000 N. Die so genannte Zuhaltung kann je nach Anwendungsfall eine sicherheitsrelevante Funktion haben oder alternativ dazu als reiner Prozessschutz dienen. Sofern die Zuhaltung eine sicherheitsrelevante Funktion hat, ist diese derart ausgestaltet, dass der Elektromagnet 44 die Schutztür 12 erst freigibt, wenn die im Sicherheitsbereich 14 befindliche Maschine oder Anlage 16 vollständig zum Stillstand gekommen ist und von dieser keine Gefahr mehr ausgeht. Der Elektromagnet 44 kann in diesem Fall von der Steuerungseinheit 32 angesteuert sein. Dient die Zuhaltung dagegen als reiner Prozessschutz, so ist eine Ansteuerung des Elektromagneten 44 durch die Steuerungseinheit 32 nicht zwingend notwendig, aber dennoch bevorzugt. Die Zuhaltung bewirkt dann "nur" eine Zuhaltekraft, die einen Bediener davor warnt bzw. diesen daran hindert, die Schutztür 12 unbeabsichtigt zu öffnen. Sofern die Zuhaltekraft dennoch überwunden wird, wird die im Sicherheitsbereich 14 befindliche Maschine oder Anlage 16 sofort gestoppt, ohne dass eine Gefahr für den Bediener besteht. Der Sensor 42 gibt dabei, wie oben bereits beschrieben, das Schutztürsignal "Schutztür geöffnet" an die Steuerungseinheit 32 weiter, welche daraufhin die Stromzufuhr zu der Maschine oder Anlage 16 sofort unterbricht.

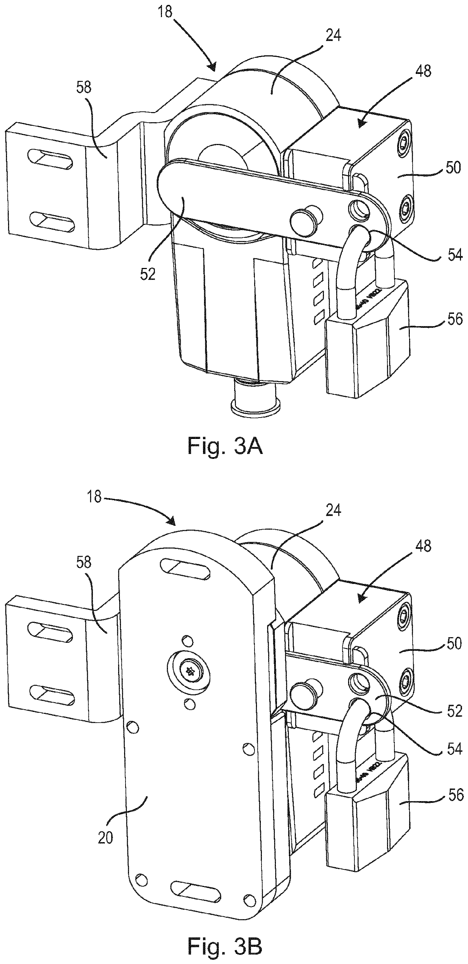

Fig. 3 zeigt eine Ausführungsform des Schutztürüberwachungsmoduls 18 mit einer Verriegelungseinrichtung 48, welche einen zentralen Bestandteil der vorliegenden Erfindung darstellt. Fig. 3A zeigt dabei lediglich das Rahmenteil 24 des Schutztürüberwachungsmoduls 18 samt der daran angeordneten Verriegelungseinrichtung 48, wohingegen Fig. 3B eine perspektivische Ansicht des gesamten Schutztürüberwachungsmoduls 18 inklusive des Türteils 20 sowie der am Rahmenteil 24 angeordneten Verriegelungseinrichtung 48 zeigt.

Die Verriegelungseinrichtung 48 weist einen Grundkörper 50 sowie einen daran angeordneten Verriegelungshebel 52 auf. Der Verriegelungshebel 52 ist im Wesentlichen plattenförmig ausgestaltet und gegenüber dem Grundkörper 50 schwenkbar. In der in Fig. 3 dargestellten Position ist der Verriegelungshebel 52 in seiner so genannten Sperrstellung. In dieser Sperrstellung verhindert der Verriegelungshebel 52 die elektrisch kontaktlose Wechselwirkung zwischen dem Betätiger 40 und dem Sensor 42. Dies geschieht dadurch, dass der Verriegelungshebel 52, wie in Fig. 3A gezeigt, vor den im Rahmenteil 42 des Schutztürüberwachungsmoduls 18 angeordneten Sensor 42 geschwenkt wird. Bei dem Versuch die Schutztür 12 während dieser Stellung des Verriegelungshebels 52 zu schließen, hält der Verriegelungshebel 52 dann das Rahmenteil 24 auf Abstand von dem Türteil 20. Hierdurch wird der im Türteil 20 befindliche Betätiger 40 von dem im Rahmenteil 24 angeordneten Sensor 42 beabstandet. Unter Umständen lässt sich die Schutztür 12 aufgrund des dazwischen geschobenen bzw. dazwischen geschwenkten Verriegelungshebels 52 dann auch gar nicht mehr schließen. In jedem Fall verhindert der Verriegelungshebel 52 in seiner Sperrstellung jedoch, dass der Sensor 42 den Betätiger 40 (RFID-Transponder) detektiert. Unabhängig von der Stellung der Schutztür 12 kann somit in diesem Fall kein Schutztürsignal "Tür geschlossen" an die Steuerungseinheit 32 gesendet werden, so dass ein Ingangsetzen der Maschine bzw. Anlage 16 während dieser Stellung des Verriegelungshebels 52 unmöglich ist.

Die oben bereits erwähnte Verriegelungseinrichtung 48 ist in folgender denkbarer Situation von wesentlichem Vorteil: Ein Bediener, der beispielsweise zu Reparaturzwecken den Sicherheitsbereich 14 betritt, löst beim Öffnen der Schutztür 12 automatisch den NOT-AUS der Anlage 16 aus. Um sich dagegen abzusichern, dass während seiner Reparaturarbeiten die Schutztür 12 aus Versehen zufällt oder diese unbeabsichtigterweise durch eine weitere Person geschlossen wird, bringt der Bediener den Verriegelungshebel 52 der Verriegelungseinrichtung 48 in oben genannte Sperrstellung. Die Verriegelungseinrichtung 48 weist des Weiteren eine Aufnahme 54 für ein Vorhängeschloss 56 auf. Letzteres wird vorliegend allgemein auch als abschließbares Sicherungsteil 56 bezeichnet. Sobald der Bediener also den Verriegelungshebel 52 in die Sperrstellung gebracht hat, kann dieser zusätzlich noch ein Vorhängeschloss 56 in die Aufnahme 54 einführen. Ein Verschwenken des Verriegelungshebels 52 aus seiner Sperrstellung heraus ist dann nicht mehr möglich. Bei einem Versuch den Verriegelungshebel 52 zu verschwenken, würde das Vorhängeschloss 56 nämlich mit dem Grundkörper 50 der Verriegelungseinrichtung 48 kollidieren, so dass der Verriegelungshebel 52 in seiner Sperrstellung blockiert ist.

Einer weiteren Person, die dann versuchen sollte, die Schutztür 12 zu schließen, wird dies dann nicht gelingen. Das Lösen des Verriegelungshebels 52 aus seiner Sperrstellung heraus ist nur dem Bediener möglich, da nur er den Schlüssel zu dem Vorhängeschloss 56 besitzt. Dies bietet eine immens erhöhte Sicherheit für den Bediener und verbessert darüber hinaus auch den Manipulationsschutz des Schutztürüberwachungsmoduls 18 bzw. des gesamten Schutztürüberwachungssystems 10.

Wie aus den Fig. 3A und 3B des Weiteren ersichtlich ist, ist am Rahmenteil 24 des Schutztürüberwachungsmoduls 18 ein Schenkel bzw. Winkel 58 angeordnet, um das Rahmenteil 24 am Türrahmen bzw. der Türzarge der Schutztür 12 anzubringen. Auf ähnliche Art und Weise ist auch das Türteil 20 des Schutztürüberwachungsmoduls 18 am beweglichen Teil 22 der Schutztür 12 angebracht. Es versteht sich, dass anstelle einer verschraubten Verbindung auch andere Verbindungen grundsätzlich denkbar sind.

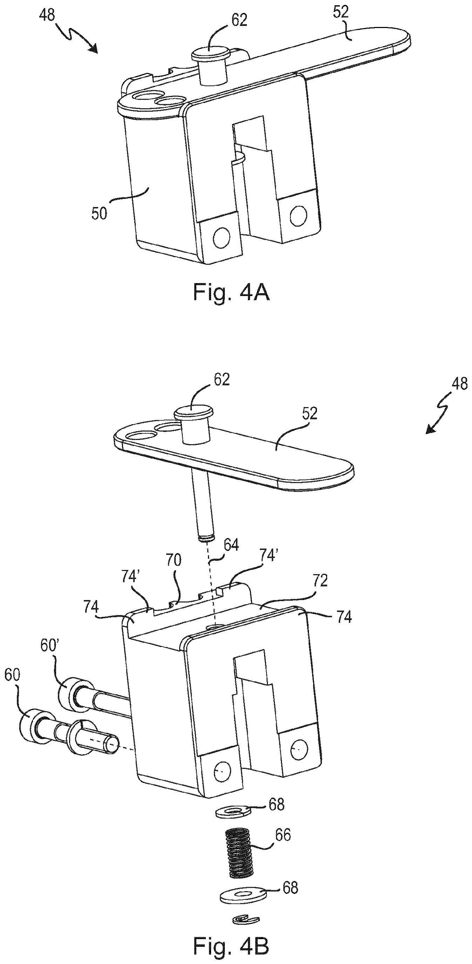

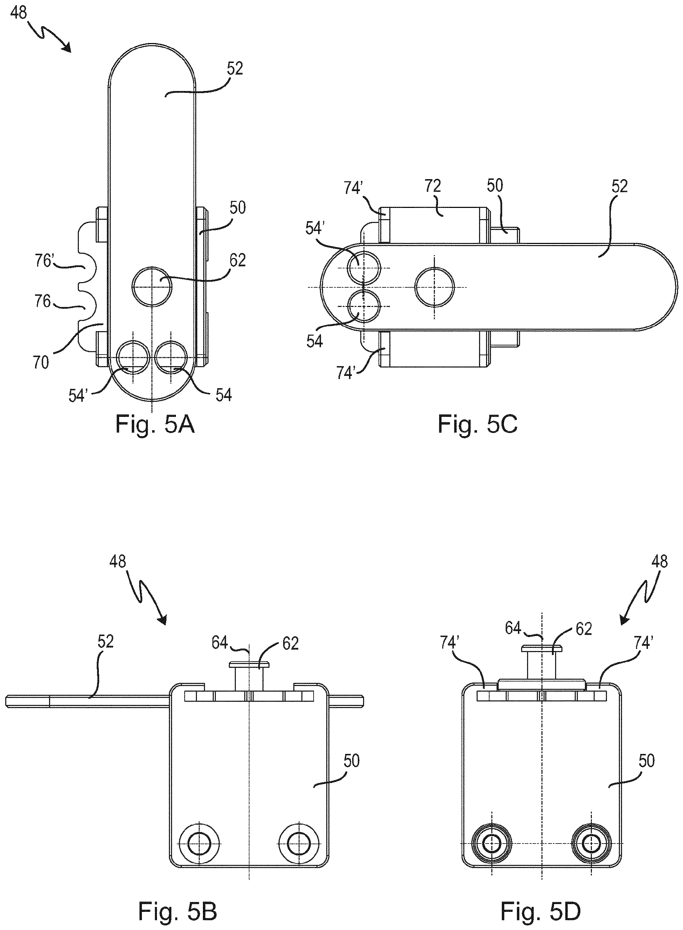

Die Fig. 4 und 5 zeigen weitere Details der erfindungsgemäßen Verriegelungseinrichtung 48. Wie aus der in Fig. 4B dargestellten Explosionsansicht ersichtlich ist, wird der Grundkörper 50 vorzugsweise über Schrauben 60, 60' an dem Rahmenteil 24 des Schutztürüberwachungsmoduls 18 befestigt. Um den Verriegelungshebel 52 gegenüber dem Grundkörper 50 von Hand verschwenken zu können, weist der Verriegelungshebel 52 einen Haltegriff 62 auf. Grundsätzlich wäre zwar auch eine durch einen Aktor angetriebene Schwenkbewegung des Verriegelungshebels 52 denkbar. Eine Verschwenkbarkeit des Verriegelungshebels 52 von Hand bietet jedoch eine einfache Handhabbarkeit und spart zudem Kosten für ansonsten extra vorzusehende Aktoren. Der gezeigte Haltegriff 62 verläuft vorzugsweise entlang der Schwenkachse 64, um welche der Verriegelungshebel 52 schwenkbar ist.

Der Verriegelungshebel 52 ist über ein entlang der Schwenkachse 64 angeordnetes Federelement 66 mit dem Grundkörper 50 gekoppelt (siehe Fig. 4B). Dieses Federelement 66 übt eine Federkraft aus, welche den Verriegelungshebel 52 gegen die Oberseite des Grundkörpers 50 drückt. Zur Stabilisierung können zusätzliche Distanzscheiben 68 vorgesehen sein.

Die Fig. 5A und 5B zeigen verschiedene Seitenansichten der Verriegelungseinrichtung 48, bei der der Verriegelungshebel 52 in der Freigabestellung ist. In dieser Freigabestellung verhindert der Verriegelungshebel 52 die elektrisch kontaktlose Wechselwirkung zwischen Betätiger 40 und Sensor 42 nicht. Die Fig. 5C und 5D zeigen dagegen den Verriegelungshebel 52 in seiner Sperrstellung, Um den Verriegelungshebel 52 aus seiner Freigabestellung in die Sperrstellung zu bringen, muss dieser lediglich um 90° um die Schwenkachse 64 gegenüber dem Grundkörper 50 verschwenkt werden.

Der Verriegelungshebel 52 ist vorzugsweise sowohl in der Freigabestellung als auch in der Sperrstellung mit dem Grundkörper 50 verrastbar. Der Grundkörper 50 weist dazu an seiner Oberseite zwei Ausnehmungen 70, 72 auf, in welchen der Verriegelungshebel 52 bündig angeordnet werden kann. Dabei entsteht eine Art Formschluss zwischen dem Verriegelungshebel 52 und den Ausnehmungen 70 bzw. 72. Beide Ausnehmungen 70, 72 werden seitlich durch Stege 74 bzw. 74' begrenzt. Diese dienen als seitliche Wände, welche den Verriegelungshebel 52 in der Freigabestellung bzw. in der Sperrstellung daran hindern, zu verrutschen bzw. zu verschwenken. Um den Verriegelungshebel 52 von der Freigabestellung in die Sperrstellung zu verschwenken bzw. umgekehrt, muss er mithilfe des Haltegriffs 62 nach oben entlang der Schwenkachse 64 über die Stege 74, 74' gezogen werden. Hierbei muss der Bediener die von dem Federelement 66 ausgeübte Federkraft überwinden. Erst dann lässt sich der Verriegelungshebel 52 um 90° in die jeweils andere Stellung verschwenken.

Wie aus Fig. 5A des Weiteren ersichtlich ist, weist der Verriegelungshebel 52 nicht nur eine, sondern zwei Aufnahmen 54, 54' auf. Diese Aufnahmen 54, 54' sind vorzugsweise als Durchgangsbohrungen durch den plattenförmigen Verriegelungshebel 52 ausgestaltet. Sie dienen, wie bereits erwähnt, dazu, dass ein Bediener in diese ein Vorhängeschloss 56 einführen kann, um den Verriegelungshebel 52 in seiner Sperrstellung zu fixieren. Zwei Bohrungen 54, 54' haben den Vorteil, dass mehrere (zwei) Vorhängeschlösser in diese eingeführt werden können. Auf diese Weise kann jeder Bediener sein persönliches Vorhängeschloss in eine der beiden Bohrungen 54, 54' einführen.

In Fig. 5A ist noch ein weiteres Detail der Verriegelungseinrichtung 48 sichtbar. Am Grundkörper 50 sind zwei Aussparungen 76, 76' vorgesehen, welche in der Sperrstellung des Verriegelungshebels 52 mit den in dem Verriegelungshebel 52 vorgesehenen Bohrungen 54, 54' zumindest teilweise fluchten. Diese Aussparungen 76, 76' können grundsätzlich auch als Bohrungen ausgestaltet sein. Sie bieten einen weiteren mechanischen Schutz dafür, der verhindert, dass der Verriegelungshebel 52 bei eingehängtem Vorhängeschloss 56 aus seiner Sperrstellung verschwenkbar ist. Da die Aussparungen 76, 76' mit den Bohrungen 54, 54' vorzugsweise exakt fluchten, entsteht beim Einhängen eines Vorhängeschlosses 56 in eine der beiden Öffnungen sozusagen ein Formschluss zwischen dem Bügel des Vorhängeschlosses und der jeweiligen Bohrung 54, 54' bzw. Aussparung 76, 76'.

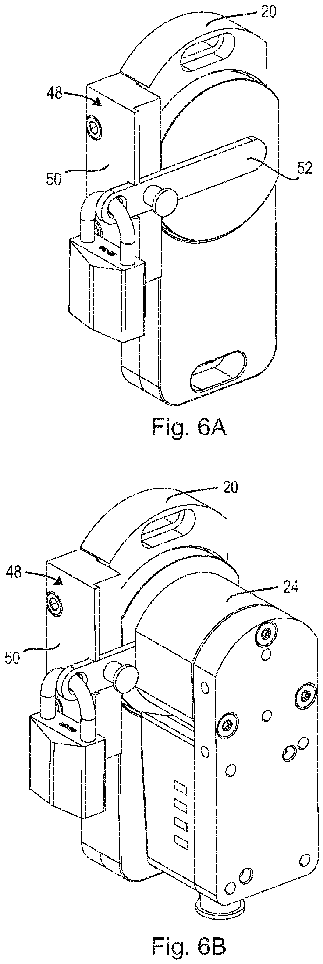

Fig. 6 zeigt eine weitere Ausführungsform. Im Unterschied zu der in Fig. 3 gezeigten Ausführungsform ist die Verriegelungseinrichtung 48 hier nicht an dem Rahmenteil 24, sondern an dem Türteil 20 angeordnet. Die Verriegelungseinrichtung 48 ist also hier mit anderen Worten an dem Betätiger 40 angeordnet, und nicht, wie in Fig. 3, an dem Sensor 42. Funktion und Aufbau der Verriegelungseinrichtung 48 können dabei jedoch gleich bleiben. Lediglich der Grundkörper 50 ist etwas anders, beispielsweise schmaler ausgestaltet.

Zusammenfassend ist es den Erfindern also gelungen, das Schutztürüberwachungssystem durch eine darin zusätzlich verwendete Verriegelungseinrichtung zusätzlich zu verbessern. Die vorgestellte Verriegelungseinrichtung verhindert insbesondere bei schlecht einzusehenden Anlagen ein unbeabsichtigtes Schließen der Schutztür, während sich ein Bediener noch innerhalb des Sicherheits- bzw. Gefahrenbereichs befindet. Die erfindungsgemäße Verriegelungseinrichtung zeichnet sich insbesondere durch deren einfache Handhabung sowie durch deren geringe Manipulationsmöglichkeit aus.

## Patentansprüche

1. Schutztürüberwachungssystem (10) mit:
- einer Schutztür (12) als Zugang zu einem Sicherheitsbereich (14),
- einem Schutztürüberwachungsmodul (18) zur Überwachung eines Zustands der Schutztür (12), mit einem Betätiger (40) und einem Sensor (42), welche elektrisch kontaktlos in Wechselwirkung miteinander bringbar sind und dadurch ein Schutztürsignal erzeugen,
- einer Steuerungseinheit (32), welche dazu eingerichtet ist das Schutztürsignal auszulesen und eine im Sicherheitsbereich (12) befindliche Maschine oder Anlage (16) in Abhängigkeit des Schutztürsignals zu steuern, und
- einer Verriegelungseinrichtung (48) mit einem Grundkörper (50) und einem daran angeordneten Verriegelungshebel (52), welcher gegenüber dem Grundkörper (50) aus einer Freigabestellung in eine Sperrstellung bringbar ist, in welcher der Verriegelungshebel (52) die elektrisch kontaktlose Wechselwirkung zwischen dem Betätiger (40) und dem Sensor (42) verhindert, wobei die Verriegelungseinrichtung (48) eine Aufnahme (54) für ein abschließbares Sicherungsteil (56) aufweist, welches, in die Aufnahme (54) eingeführt, den Verriegelungshebel (52) in seiner Sperrstellung hält, wobei der Verriegelungshebel (52) gegenüber dem Grundkörper (50) aus der Freigabestellung in die Sperrstellung um eine Schwenkachse (64) mechanisch verschwenkbar ist,
**dadurch gekennzeichnet, dass** der Verriegelungshebel (52) über ein entlang der Schwenkachse (64) angeordnetes Federelement (66) mit dem Grundkörper (50) gekoppelt ist, welches in der Freigabestellung und in der Sperrstellung eine Federkraft ausübt, die den Verriegelungshebel (52) gegen den Grundkörper (50) drückt, und wobei an dem Grundkörper (50) eine erste und eine zweite Ausnehmung (72, 70) vorgesehen sind, wobei der Verriegelungshebel (52) in der Freigabestellung durch Anordnung in der ersten Ausnehmung (72) verrastet und in der Sperrstellung durch Anordnung in der zweiten Ausnehmung (70) verrastet.

2. Schutztürüberwachungssystem nach Anspruch 1, wobei das Schutztürüberwachungsmodul (18) ferner einen Elektromagneten (44) für eine magnetische Zuhaltung der Schutztür (12) aufweist.

3. Schutztürüberwachungssystem nach Anspruch 1 oder 2, wobei der Verriegelungshebe! (52) in der Sperrstellung die elektrisch kontaktlos Wechselwirkung zwischen dem Betätiger (40) und dem Sensor (42) durch mechanische Beabstandung der beiden verhindert.

4. Schutztürüberwachungssystem nach einem der Ansprüche 1 bis 3, wobei der Sensor (42) an einem ersten Teil (22) der Schutztür (12) und der Betätiger (40) an einem zweiten Teil (26) der Schutztür (12) angeordnet ist, wobei die beiden Teile (22, 26) bei einem Öffnen der Schutztür (12) voneinander getrennt werden.

5. Schutztürüberwachungssystem nach Anspruch 3, wobei die Verriegelungseinrichtung (48) an dem ersten Teil (22) der Schutztür (12) angeordnet ist.

6. Schutztürüberwachungssystem nach Anspruch 3, wobei die Verriegelungseinrichtung (48) an dem zweiten Teil (26) der Schutztür (12) angeordnet ist.

7. Schutztürüberwachungssystem nach Anspruch 1, wobei an dem Verriegelungshebel (52) ein im Wesentlichen entlang der Schwenkachse (64) verlaufender Haltegriff (62) vorgesehen ist zum Verschwenken des Verriegelungshebels (52) von Hand.

8. Schutztürüberwachungssystem nach einem der Ansprüche 1 bis 7, wobei die Aufnahme (54) für das abschließbare Sicherungsteil (56) als Bohrung in dem Verriegelungshebel (52) ausgestaltet ist.

9. Schutztürüberwachungssystem nach einem der Ansprüche 1 bis 8, wobei an dem Grundkörper (50) eine Aussparung (76) vorgesehen ist, welche in der Sperrstellung des Verriegelungshebels (52) mit der in dem Verriegelungshebel (52) vorgesehenen Bohrung (54) zumindest teilweise fluchtet.

10. Schutztürüberwachungssystem nach einem der Ansprüche 1 bis 9, wobei in dem Verriegelungshebel (52) zwei Bohrungen (54, 54') als Aufnahme für jeweils ein abschließbares Sicherungsteil (56) vorgesehen sind und an dem Grundkörper (50) zwei Aussparungen (76, 76') vorgesehen sind, welche in der Sperrstellung des Verriegelungshebels (52) mit den im Verriegelungshebel vorgesehenen Bohrungen (54, 54') zumindest teilweise fluchten.

11. Verriegelungseinrichtung (48) für ein Schutztürüberwachungsmodul (18), welches einen Zustand einer Schutztür (12) überwacht und einen Betätiger (40) sowie einen Sensor (42) besitzt, welche elektrisch kontaktlos in Wechselwirkung miteinander bringbar sind und dadurch ein Schutztürsignal erzeugen, wobei die Verriegelungseinrichtung (48) einen Grundkörper (50) und einen daran angeordneten Verriegelungshebel (52) aufweist, welcher gegenüber dem Grundkörper (50) aus einer Freigabestellung in eine Sperrstellung bringbar ist, in welcher der Verriegelungshebel (52) die elektrisch kontaktlose Wechselwirkung zwischen dem Betätiger (40) und dem Sensor (42) verhindert, und wobei die Verriegelungseinrichtung (48) eine Aufnahme (54) für ein abschließbare Sicherungsteil (56) aufweist, welches, in die Aufnahme (54) eingeführt, den Verriegelungshebel (52) in seiner Sperrstellung hält, wobei der Verriegelungshebel (52) gegenüber dem Grundkörper (50) aus der Freigabestellung in die Sperrstellung um eine Schwenkachse (64) mechanisch verschwenkbar ist,
**dadurch gekennzeichnet, dass** der Verriegelungshebel (52) über ein entlang der Schwenkachse (64) angeordnetes Federelement (66) mit dem Grundkörper (50) gekoppelt ist, welches in der Freigabestellung und in der Sperrstellung eine Federkraft ausübt, die den Verriegelungshebel (52) gegen den Grundkörper (50) drückt, und wobei an dem Grundkörper (50) eine erste und eine zweite Ausnehmung (72, 70) vorgesehen sind, wobei der Verriegelungshebel (52) in der Freigabestellung durch Anordnung in der ersten Ausnehmung (72) verrastet und in der Sperrstellung durch Anordnung in der zweiten Ausnehmung (70) verrastet.

## Claims

1. A guard door monitoring system (10), comprising:
- a guard door (12) as an entrance to a safety area (14),
- a guard door monitoring module (18) for monitoring a state of the guard door (12), having an actuator (40) and a sensor (42), which can be brought into interaction with one another in an electrically contactless manner and thereby generate a guard door signal,
- a control unit (32), which is configured to read the guard door signal and to control a machine or system (16) located in the safety area (12) depending on the guard door signal, and
- a locking device (48) with a main body (50) and a locking lever (52) arranged on the main body, which locking lever is moveable relative to the main body (50) from a release position into a blocking position in which the locking lever (52) prevents the electrically contactless interaction between the actuator (40) and the sensor (42), wherein the locking device (48) comprises a receptacle (54) for a lockable securing part (56), which, when introduced into the receptacle (54), keeps the locking lever (52) in the blocking position, wherein the locking lever is mechanically pivotable relative to the main body about a pivot axis from the release position into the blocking position,
**characterized in that** the locking lever (52) is coupled to the main body (50) via a spring element (66) which is arranged along the pivot axis (64), wherein the spring element (66) in the release position and/or in the blocking position exerts a spring force that pushes the locking lever (52) against the main body (50), and wherein a first and a second recess (72, 70) are provided on the main body (50), wherein the locking lever (52) latches in the release position by arrangement in the first recess (72) and latches in the blocking position by arrangement in the second recess (70).

2. The guard door monitoring system as claimed in claim 1, wherein the guard door monitoring module (18) also has an electromagnet (44) for a magnetic locking of the guard door (12).

3. The guard door monitoring system as claimed in claim 1 or 2, wherein the locking lever (52) in the blocking position prevents the electrically contactless interaction between the actuator (40) and the sensor (42) by means of mechanical distancing of the two from one another.

4. The guard door monitoring system as claimed in one of claims 1 to 3, wherein the sensor (42) is arranged on a first part (22) of the guard door (12) and the actuator (40) is arranged on a second part (26) of the guard door (12), wherein the two parts (22, 26) are separated from one another when the guard door (12) is opened.

5. The guard door monitoring system as claimed in claim 3, wherein the locking device (48) is arranged on the first part (22) of the guard door (12).

6. The guard door monitoring system as claimed in claim 3, wherein the locking device (48) is arranged on the second part (26) of the guard door (12).

7. The guard door monitoring system as claimed in claim 1, wherein a holding grip (62) running substantially along the pivot axis (64) is provided on the locking lever (52) in order to pivot the locking lever (52) by hand.

8. The guard door monitoring system as claimed in one of claims 1 to 7, wherein the receptacle (54) for the closable securing part (56) is formed as a bore in the locking lever (52).

9. The guard door monitoring system as claimed in one of claims 1 to 8, wherein a recess (76) is provided on the main body (50), which recess in the blocking position of the locking lever (52) is at least partially aligned with the bore (54) provided in the locking lever (52).

10. The guard door monitoring system as claimed in one of claims 1 to 9, wherein two bores (54, 54') are provided in the locking lever (52) each as receptacle for a closable securing part (56), and two recesses (76, 76') are provided on the main body (50), which recesses in the blocking position of the locking lever (52) are at least partially aligned with the bores (54, 54') provided in the locking lever.

11. A locking device (48) for a guard door monitoring module (18), which monitors a state of a guard door (12) and has an actuator (40) and also a sensor (42), which can be brought into interaction with one another in an electrically contactless manner and thereby generate a guard door signal, wherein the locking device (48) comprises a main body (50) and a locking lever (52) arranged on the main body (50), which locking lever is moveable relative to the main body (50) from a release position into a blocking position in which the locking lever (52) prevents the electrically contactless interaction between the actuator (40) and the sensor (42), wherein the locking device (48) comprises a receptacle (54) for a lockable securing part (56), which, when introduced into the receptacle (54), keeps the locking lever (52) in the blocking position, wherein the locking lever is mechanically pivotable relative to the main body about a pivot axis from the release position into the blocking position,
**characterized in that** the locking lever (52) is coupled to the main body (50) via a spring element (66) which is arranged along the pivot axis (64), wherein the spring element (66) in the release position and/or in the blocking position exerts a spring force that pushes the locking lever (52) against the main body (50), and wherein a first and a second recess (72, 70) are provided on the main body (50), wherein the locking lever (52) latches in the release position by arrangement in the first recess (72) and latches in the blocking position by arrangement in the second recess (70).

## Revendications

1. Système (10) de surveillance de porte de sécurité présentant :
une porte de sécurité (12) utilisée comme accès à une zone sécurisée (14),
un module (18) de surveillance de porte de sécurité qui surveille l'état de la porte de sécurité (12) et qui présente un actionneur (40) et un capteur (42) qui peuvent être amenés à échanger mutuellement sans contact électrique pour ainsi former un signal de porte de sécurité,
une unité de commande (32) conçue pour lire le signal de porte de sécurité et pour commander en fonction du signal de porte de sécurité une machine ou une installation (16) située dans la zone sécurisée (12) et
un dispositif de verrouillage (48) doté d'un corps de base (50) sur lequel est disposé un levier de verrouillage (52) qui peut être déplacé par rapport au corps de base (50) depuis une position de libération jusque dans une position de blocage dans laquelle le levier de verrouillage (52) empêche l'interaction sans contact électrique entre l'actionneur (40) et le capteur (42), le dispositif de verrouillage (48) présentant un logement (54) pour une pièce refermable de protection (56) qui maintient le levier de verrouillage (52) dans sa position de blocage lorsqu'elle est insérée dans le logement (54), le levier de verrouillage (52) pouvant pivoter mécaniquement par rapport au corps de base (50) autour d'un axe de pivotement (64) depuis la position de libération jusque dans la position de blocage,
**caractérisé en ce que**
le levier de verrouillage (52) est accouplé au corps de base (50) par l'intermédiaire d'un élément élastique (66) qui est disposé le long de l'axe de pivotement (64) et qui exerce dans la position de libération et dans la position de blocage une force élastique qui repousse le levier de verrouillage (52) contre le corps de base (50),
**en ce qu'**une première et une deuxième découpe (72, 70) sont prévues sur le corps de base (50) et
**en ce que** dans la position de libération, le levier de verrouillage (52) s'engage élastiquement dans la première découpe (72) et dans la position de blocage, il s'engage élastiquement dans la deuxième découpe (70).

2. Système de surveillance de porte de sécurité selon la revendication 1, dans lequel le module (18) de surveillance de porte de sécurité présente en outre un électro-aimant (44) qui retient magnétiquement la porte de sécurité (12).

3. Système de surveillance de porte de sécurité selon les revendications 1 ou 2, dans lequel lorsque le levier de verrouillage (52) se trouve dans la position de blocage, il empêche l'interaction sans contact électrique entre l'actionneur (40) et le capteur (42) en les maintenant mécaniquement à distance.

4. Système de surveillance de porte de sécurité selon l'une des revendications 1 à 3, dans lequel le capteur (42) est disposé sur une première partie (22) de la porte de sécurité (12) et l'actionneur (40) sur une deuxième partie (26) de la porte de protection (12), les deux parties (22, 26) étant séparées l'une de l'autre par ouverture de la porte de sécurité (12).

5. Système de surveillance de porte de sécurité selon la revendication 3, dans lequel le dispositif de verrouillage (48) est disposé sur la première partie (22) de la porte de protection (12).

6. Système de surveillance de porte de sécurité selon la revendication 3, dans lequel le dispositif de verrouillage (48) est disposé sur la deuxième partie (26) de la porte de protection (12).

7. Système de surveillance de porte de sécurité selon la revendication 1, dans lequel une poignée (62) qui s'étend essentiellement suivant l'axe de pivotement (64) est prévue sur le levier de verrouillage (52) et permet de faire pivoter le levier de verrouillage (52) à la main.

8. Système de surveillance de porte de sécurité selon l'une des revendications 1 à 7, dans lequel le logement (54) prévu pour la pièce refermable de protection (56) est configuré comme alésage ménagé dans le levier de verrouillage (52).

9. Système de surveillance de porte de sécurité selon l'une des revendications 1 à 8, dans lequel un creux (76) aligné au moins en partie sur l'alésage (54) prévu dans le levier de verrouillage (52) lorsque le levier de verrouillage (52) est en position de blocage est prévu sur le corps de base (50).

10. Système de surveillance de porte de sécurité selon l'une des revendications 1 à 9, dans lequel deux alésages (54, 54') servant de logement pour une pièce refermable de protection (56) sont prévus dans le levier de verrouillage (52) et en ce que deux découpes (76, 76') qui sont alignées au moins en partie sur les alésages (54, 54') prévus dans le levier de verrouillage lorsque le levier de verrouillage (52) se trouve en position de blocage sont prévues sur le corps de base (50).

11. Dispositif de verrouillage (48) pour module (18) de surveillance de porte de protection qui surveille l'état d'une porte de sécurité (12) et qui possède un actionneur (40) ainsi qu'un capteur (42) qui peuvent être amenés à coopérer mutuellement sans contact électrique et ainsi former un signal de porte de protection, le dispositif de verrouillage (48) présentant un corps de base (50) sur lequel est disposé un levier de verrouillage (52) qui peut être déplacé par rapport au corps de base (50) depuis une position de libération jusque dans une position de blocage dans laquelle le levier de verrouillage (52) empêche l'interaction sans contact électrique entre l'actionneur (40) et le capteur (42), le dispositif de verrouillage (48) présentant un logement (54) pour une pièce refermable de protection (56) qui maintient le levier de verrouillage (52) dans sa position de blocage lorsqu'elle est insérée dans le logement (54), le levier de verrouillage (52) pouvant pivoter mécaniquement par rapport au corps de base (50) autour d'un axe de pivotement (64) depuis la position de libération jusque dans la position de blocage, **caractérisé en ce que**
le levier de verrouillage (52) est accouplé au corps de base (50) par l'intermédiaire d'un élément élastique (66) qui est disposé le long de l'axe de pivotement (64) et qui exerce dans la position de libération et dans la position de blocage une force élastique qui repousse le levier de verrouillage (52) contre le corps de base (50),
**en ce qu'**une première et une deuxième découpe (72, 70) sont prévues sur le corps de base (50) et
**en ce que** dans la position de libération, le levier de verrouillage (52) s'engage élastiquement dans la première découpe (72) et dans la position de blocage, il s'engage élastiquement dans la deuxième découpe (70).
